# EUROPÄISCHE PATENTSCHRIFT

(11) **EP 1 085 938 B1**
(45) Veröffentlichungstag und Bekanntmachung des Hinweises auf die Patenterteilung: **26.01.2005**
(21) Anmeldenummer: 99923595.5
(22) Anmeldetag: 14.05.1999
(51) Int. Cl.: B01D 53/50

(54) **VERFAHREN ZUR NASSEN RAUCHGASENTSCHWEFELUNG UND VORRICHTUNG ZUR DURCHFÜHRUNG DESSELBEN**
METHOD FOR WET FLUE GAS DESULFURIZATION AND DEVICE FOR IMPLEMENTING SAID METHOD
PROCEDE DE DESULFURATION DE FUMEES PAR VOIE HUMIDE ET DISPOSITIF POUR METTRE EN OEUVRE LEDIT PROCEDE

(30) Priorität: 16.05.1998 DE 19822073
(43) Veröffentlichungstag der Anmeldung: 28.03.2001
(73) Patentinhaber: Fisia Babcock Environment GmbH, 51643 Gummersbach (DE)
(72) Erfinder: WELP, Helmut, D-97199 Ochsenfurt (DE)
(74) Vertreter: Carstens, Wilhelm, Dipl.-Phys.
(86) Internationale Anmeldenummer: PCT/EP1999/003320
(87) Internationale Veröffentlichungsnummer: WO 1999/059703

(56) Entgegenhaltungen:
- EP-A- 0 162 536
- EP-A- 0 363 009
- EP-A- 0 745 421
- DE-A- 4 338 379
- DE-A- 19 741 120
- DE-C- 4 345 364

## Beschreibung

Gegenstand der vorliegenden Erfindung ist ein Verfahren zur nassen Rauchgasentschwefelung in einem Zweikreis-Wäscher mit Sprühvorrichtungen für die Absorptionsmittel und einem Behälter für das Absorptionsmittel auf Basis von Suspensionen enthaltend Calciumverbindungen, wobei das zunächst entstehende Calciumsulfit durch über mindestens eine Vorrichtung zum Einblasen von Luftsauerstoff eingeblasenen Luftsauerstoff oder Restsauerstoff des Rauchgases zu Calciumsulfat oxidier wird und wobei das Absorptionsmittel nach dem zweiten Waschvorgang zumindest teilweise in einer Auffangvorrichtung wiederaufgefangen und über eine Rückleitung in den Bahälter zurückgeführt wird. Weiterhin betrifft die Erfindung eine Vorrichtung zur Durchführung dieses Verfahrens.

Aus der DE 43 45 364 C2 und der EP 0 162 536 A1 sind solche Verfahren bzw. Vorrichtungen bekannt.

Aus der DE 29 44 536 und DE 30 11 592 ist ein Verfahren bekannt, bei welchem zumindest ein Teil des verbrauchten Absorptionsmittel des zweiten (oberen) Kreislaufs aufgefangen und über eine Auffang- und Rücklaufeinrichtung zum Absorberversorgungsbehälter zurückgeführt wird und bei dem der Versorgungsbehälter neben dem Wäscher angeordnet ist. Bei den Verfahren und Vorrichtungen zur Durchführung dieser Verfahren ist es bisher üblich, den Behälter für das Absorptionsmittel neben dem Wäscher anzuordnen und von diesem Behälter aus die Sprühvorrichtungen zu versorgen.

Aus der DE 43 45 364 C2 ist bekannt, in einem solchen Zweikreis-Wäscher das verbrauchte Absorptionsmittel des zweiten (oberen) Kreislaufes in diesen Behälter zurückgeführen und dort die Reaktion zwischen Schwefeloxidverbindungen und Calciumverbindungen fortzusetzen.

Aus der DE-A-196 01 193 ist ein Verfahren bekannt, bei welchem das Absorptionsmittel im Inneren des Wäschers in einem oben offenen Behälter vorgehalten und nach dem Waschvorgang zumindest teilweise wieder in ihm aufgefangen wird, wobei der Flüssigkeitspegel im Behälter höher liegt als der Flüssigkeitspegel im Sumpf des Wäschers. All diese Verfahren und Vorrichtungen haben sich im Prinzip bewährt. Bei all diesen Verfahren erfordert aber die Oxidation des Calciumsulfits zum Calciumsulfat zusätzliche Investitionen und verbraucht zusätzliche Energie.

Die Erfindung hat sich somit die Aufgabe gestellt, in einem Zweikreis-Wäscher die Oxidation des Calciumsulfits zum Calciumsulfat zu vereinfachen und zu verbilligen, wobei selbstverständlich die Betriebssicherheit nicht gefährdet werden darf.

Diese Aufgabe wird dadurch gelöst, daß das Absorptionsmittel während des Auffangens in der Auffangvorrichtung und/oder in die Rückleitung mit Luftsauerstoff in Kontakt gebracht wird.

In üblichen Zweikreis-Wäschern wird das Absorptionsmittel nach dem zweiten Waschvorgang zumindest teilweise wiederaufgefangen mit Hilfe eines Trichters oder einer Auffangschale, von der aus über eine Rückleitung das Absorptionsmittel in den Behälter für das Absorptionsmittel zurückfließt oder zurückgepumpt wird. Bei Vorrichtungen gemäß DE-A-196 01 193 wird das Absorptionsmittel nach dem Waschvorgang zumindest teilweise aufgefangen durch den oben offenen Behälter, der sich im Inneren des Wäschers befindet.

Die Oxidation von Calciumsulfit zu Calciumsulfat ist in erheblichem Maße von pH-Wert des Absorptionsmittels abhängig. Je niedriger der pH-Wert ist, desto schneller und leichter erfolgt die Oxidation vom Calciumsulfit zum Calciumsulfat.

Das erfindungsgemäße Verfahren macht davon Gebrauch, daß das Absorptionsmittel nach dem zweiten Waschvorgang nicht nur mehr Calciumsulfit enthält, sondern auch einen niedrigeren pH-Wert besitzt. Während der pH-Wert der Absorptionsmittel im allgemeinen über 6, wenn nicht sogar über 6,5 liegt, besitzt das Absorptionsmittel nach dem zweiten Waschvorgang einen pH-Wert von ca. 5,5 bis 5,6. In allen bisher üblichen Zweikreis-Wäschern ist aber gerade dieser Teil des Absorptionsmittels sauerstoffarm, so daß nur eine geringfügige Oxidation stattfindet. In üblichen Zweikreis-Wäschern aber auch in Wäschern gemäß DE-A-196 01 193 wird das Absorptionsmittel nach dem ersten Waschvorgang insbesondere im Sumpf gesammelt und dort aktiv mit Luftsauerstoff in Kontakt gebracht.

Die Erfindung gestattet es, die Oxidation von Calciumsulfit zum Calciumsulfat wesentlich einfacher und billiger durchzuführen, indem das Absorptionsmittel nach dem zweiten Waschvorgang zumindest teilweise wieder aufgefangen und in den Behälter zurückgeführt wird, jedoch auf diesem Weg unmittelbar aktiv mit Luftsauerstoff in Kontakt gebracht wird. Apparativ ist dies am einfachsten möglich, wenn die Auffangvorrichtung und/oder die Rückleitung Vorrichtungen zum aktiven Einblasen von Luftsauerstoff aufweist. Es ist nur ein relativ geringer Überdruck notwendig, um die Luft in das Absorptionsmittel einzublasen. Das zu oxidierende Absorptionsmittel wiederum ist bereits in Bewegung, da es aus der Auffangvorrichtung durch den Höhenunterschied in der Abflußleitung zum Behälter geführt wird und dort dann bereits mehr oder weniger vollständig oxidiert ankommt.

Bei einer Vorrichtung gemäß DE-A-196 01 193 genügt es, kurz unterhalb des oberen Flüssigkeitspegels des Abssorptionsmittels die wiederaufgefangene Menge des Absorptionsmittels aktiv zu belüften. Es wird dadurch ausreichend mit Sauerstoff angereichert, um bei seiner langsamen Wanderung an den Boden des Behälters die mehr oder weniger vollständige Oxidation des Calciumsulfits zum Calciumsulfat zu ermöglichen. Die etwa notwendige Restoxidation kann durch die übliche Einblasung von Luftsauerstoff in den Sumpf erfolgen.

Wenn also beim erfindungsgemäßen Verfahren und unter Verwendung der erfindungsgemäßen Vorrichtung die Oxidation von Calciumsulfit zum Calciumsulfat noch nicht ganz vollständig erfolgen sollte, vermindert sich somit der bisherige Aufwand für die Oxidation von Calciumsulfit zum Calciumsulfat erheblich, sei es durch Einblasen von Luftsauerstoff in den Sumpf oder in einen separaten Oxidationsbehälter. Entscheidend ist in jedem Fall, daß das Absorptionsmittels nach dem Waschvorgang optimale Konzentrationen an Calciumsulfit und einen optimalen pH-Wert für die Oxidation aufweist und daher durch unmittelbares aktives Kontaktieren mit Luftsauerstoff umgesetzt werden kann.

Ein erheblicher Vorteil des erfindungsgemäßen Verfahrens besteht darin, daß die für die Oxidation eingeblasene Luft nach weitgehendem Verbrauch ihres Sauerstoffgehalts mit dem Rauchgasstrom aus der Entschwefelungsanlage abgeleitet wird. Es sind beispielsweise keine zusätzlichen Ableitungen für die verbrauchte Luft nötig, was insbesondere bei Vorrichtungen mit separatem Oxidationsgefäß apparativen Aufwand bedeutet.

Selbstverständlich ist es prinzipiell möglich, die Oxidation vom Calciumsulfit zum Calciumsulfat dadurch zu beschleunigen und effizienter zu machen, daß die dafür eingesetzt Luft mit Sauerstoff angereichert ist. Prinzipiell wäre es auch möglich, anstelle von Luftsauerstoff reinen Sauerstoff einzusetzen. Bei diesen Ausgestaltungen des Verfahrens würde aber der Aufwand zur Gewinnung von reinem Sauerstoff als Aufwand zu berücksichtigen sein. Es gibt aber Rauchgasentschwefelungsanlagen, in denen mit Sauerstoff angereicherte Luft zur Verfügung steht und deshalb kostengünstig und einfach für die erfindungsgemäße Oxidation von Calciumsulfit zu Calciumsulfat verwendet werden könnte.

Entscheidenden Einfluß auf den apparativen Aufwand und die laufenden Betriebskosten ist hingegen das beim erfindungsgemäßen Verfahren die hohe Turbulenz des Absorptionsmittels im Auffangtrichter und die hohe relativ Geschwindigkeit in einer Rückleitung ausgenutzt werden. Es sind somit keine starken zusätzlichen Gebläse oder Rohrleitungen nötig, wie sie bisher zum Einsatz gekommen sind.

Bei einem Auffangtrichter für das Absorptionsmittel ist es beispielsweise möglich, rund um den Ablauf ein Rohr zu legen, welches eine Reihe von Löchern oder Düsen aufweist, durch welche die Luft ohne großen Überdruck in das abfließende Absorptionsmittel eingeblasen werden kann. Auch beim aktiven Kontaktieren des Absorptionsmittels mit Luftsauerstoff in der Rückleitung sind relativ einfache Belüftungsvorrichtungen geeignet, in die mit relativ geringem Überdruck die Luft in den Flüssigkeitsstrom eingeblasen werden kann.

## Patentansprüche

1. Verfahren zur nassen Rauchgasentschwefelung in einem Zweikreis-Wäscher mit Sprühvorrichtungen für die Absorptionsmittel und einem Behälter für das Absporptionsmittel auf Basis von Suspensionen enthaltend Calciumverbindungen, wobei das zunächst entstehenden Calciumsulfit durch über mindestens eine Vorrichtung zum Einblasen von Luftsauerstoff eingeblasenen Luftsauerstoff und durch Restsauerstoff des Rauchgases zu Calciumsulfat oxidiert wird und wobei das Absorptionsmittel nach dem zweiten Waschvorgang zumindest teilweise in einer Auffangvorrichtung wieder aufgefangen und über eine Rückleitung in den Behälter zurückgeführt wird,
**dadurch gekennzeichnet,**
**dass** Absorptionsmittel während des Auffangens in der Auffangvorrichtung und/ oder in die Rückleitung mit Luftsauerstoff in Kontakt gebracht wird.

2. Vorrichtung zur Durchführung des Verfahrens gemäß Anspruch 1 bestehend aus einem Zweikreis-Wäscher mit Sprühvorrichtungen für das Absorptionsmittel, einem Behälter für das Absorptionsmittel, einer Auffangvorrichtung für das gebrauchte Absorptionsmittel, einer Rückleitung von der Auffangvorrichtung zum Behälter und mindestens einer Einrichtung zum Einblasen von Luft ,
**dadurch gekennzeichnet,**
**dass** Vorrichtungen zum Einblasen von Luftsauerstoff der Auffangvorrichtung und/oder der Rückleitung zugeordnet sind.

## Claims

1. Method for wet flue gas desulfurisation in a two-circuit washer including spray devices for the absorption agents and a container for the absorption agent based on suspensions containing calcium compounds, wherein the calcium sulfide initially obtained is oxidised to calcium sulfate by air oxygen blown into via at least one device for the blowing into of air oxygen or by residual oxygen of the flue gas and wherein the absorption agent is after the second wash process at least partly recovered in a recovery device and returned via a return line to the container,
**characterised in**
**that** the absorption agent is brought into contact with air oxygen during the recovery in the recovery device and / or in the return line.

2. Device for performing the method according to claim 1 including a two-circuit washer with spray devices for the absorption agent, a container for the absorption agent, a recovery device for the used absorption agent, a return line from the recovery device to the container and at least one device for the blowing into of air,
**characterised in**
**that** the devices for blowing into of air oxygen are associated to the recovery device and / or the return line.

## Revendications

1. Procédé de désulfurisation de gaz d'échappement humide dans une installation de lavage à deux circuits incluant des dispositifs de pulvérisation pour les agents d'absorption et un conteneur pour l'agent d'absorption basé sur des suspensions contenant des composés de calcium, dans lequel le sulfure de calcium initialement obtenu est oxydé en sulfate de calcium par de l'oxygène de l'air soufflé par l'intermédiaire d'au moins un dispositif pour le soufflage d'oxygène de l'air ou par l'oxygène résiduel du gaz d'échappement et dans lequel l'agent d'absorption est, après le second processus de lavage, au moins partiellement récupéré dans un dispositif de récupération et envoyé par une conduite de renvoi vers le conteneur,
**caractérisé en ce que** l'agent d'absorption est mis en contact avec l'oxygène de l'air pendant la récupération dans le dispositif de récupération et/ou dans la conduite de renvoi.

2. Dispositif pour mettre en oeuvre le procédé de la revendication 1, comprenant une installation de lavage à deux circuits muni d'un dispositif de pulvérisation pour l'agent d'absorption, un conteneur pour l'agent d'absorption, un dispositif de récupération pour l'agent d'absorption utilisé, une conduite de retour pour le dispositif de récupération vers le conteneur et au moins un dispositif pour le soufflage d'air,
**caractérisé en ce que** le dispositif pour souffler de l'oxygène de l'air est associé au dispositif de récupération et/ou à la conduite de retour.
